# EUROPÄISCHE PATENTSCHRIFT

(11) **EP 2 956 225 B1**
(45) Veröffentlichungstag und Bekanntmachung des Hinweises auf die Patenterteilung: **03.07.2019**
(21) Anmeldenummer: 14706797.9
(22) Anmeldetag: 12.02.2014
(51) Int. Cl.: B01D 35/153, B01D 35/16, B01D 29/21

(54) **FILTEREINRICHTUNG**
FILTER APPLIANCE
DISPOSITIF DE FILTRATION

(30) Priorität: 14.02.2013 DE 102013202449
(43) Veröffentlichungstag der Anmeldung: 23.12.2015
(73) Patentinhaber: Mahle International GmbH, 70376 Stuttgart (DE)
(72) Erfinder: GRASS, Uwe, 70569 Stuttgart (DE); PREISSINGER, Markus, 71229 Leonberg (DE)
(74) Vertreter: BRP Renaud & Partner mbB Rechtsanwälte Patentanwälte Steuerberater
(86) Internationale Anmeldenummer: PCT/EP2014/052737
(87) Internationale Veröffentlichungsnummer: WO 2014/124974

(56) Entgegenhaltungen:
- WO-A1-2006/120326
- DE-A1-102009 049 868

## Beschreibung

Die vorliegende Erfindung betrifft eine Filtereinrichtung mit einem Filtergehäuse und einem darin montierbaren Ringfilterelement, gemäß dem Oberbegriff des Anspruches 1.

Eine Filtereinrichtung dient der Reinigung bzw. Filterung eines Fluids wie beispielsweise von Luft oder Öl. Hierzu weist die Filtereinrichtung in der Regel ein Filterelement auf, das insbesondere als Ringfilterelement ausgebildet sein kann und in ein zugehöriges Filtergehäuse montierbar ist. Das Ringfilterelement kann hierdurch also bei Bedarf ausgetauscht werden. Ein solches Ringfilterelement weist an einer unteren Endscheibe einen axial abstehenden Pin auf, der bei montiertem Zustand des Ringfilterelements im Filtergehäuse in einen zugehörigen Kanal des Filtergehäuses eingreift. Besagter Kanal kann beispielsweise als Ablasskanal ausgestaltet sein, so dass beim Demontieren des Ringfilterelements aus dem Filtergehäuse sich im Filtergehäuse befindendes Fluid, also insbesondere Öl, durch den Kanal abströmen kann. Solche Filtereinrichtungen kommen in unterschiedlichen Anwendungen zum Einsatz. Hierzu zählt beispielsweise der Einsatz in Kraftfahrzeugen, bei denen eine solche Filtereinrichtung für den Betrieb des Kraftfahrzeuges benötigte Fluide reinigt. Hierbei ist es wünschenswert, eine ausreichende Reinigung des zu reinigenden Fluides zu erreichen. Dabei spielt insbesondere die Qualität des Ringfilterelements eine entscheidende Rolle. Wünschenswert ist es daher, lediglich solche Ringfilterelemente zu verwenden, welche eine entsprechende Qualität aufweisen und insbesondere autorisiert sind. Ferner besteht der Wunsch, die Montage bzw. Demontage des Ringfilterelements ins bzw. aus dem Filtergehäuse einfach und wirtschaftlich günstig zu gestalten.

Um diesen Vorgaben zu genügen, ist es aus der DE 10 2009 049 868 A1 und der DE 10 2009 054 523 A1 bekannt, das Ringfilterelement und das Filtergehäuse mit zugehörigen Bereichen zu versehen bzw. auszugestalten, wobei einer der Bereiche eine Axialnut aufweist, während der andere zugehörige Bereich ein Führungselement aufweist, derart, dass das Führungselement bei der Montage des Ringfilterelements entlang einer an die Axialnut angrenzenden Führungskontur geführt wird und in montiertem Zustand in die Axialnut eingreift. Lediglich in diesem Zustand greift auch der an der Endscheibe des Ringfilterelements angeordnete Pin in den zugehörigen Kanal ein und ermöglicht eine fehlerfreie Funktion der Filtereinrichtung.

In der WO 2006/120326 A1 ist eine Filtereinrichtung gezeigt, die ein Filtergehäuse mit einem bodenseitigen Flansch aufweist. Im Flansch sind zwei Ausnehmungen vorgesehen, die jeweils mit einem Stift an einem Filtereinsatz der Filtereinrichtung zusammenwirken. Die Ausnehmungen sind in einem vorgegebenen Winkel relativ zueinander angeordnet, so dass die Stifte eine analoge Anordnung aufweisen, um in die zugehörige Ausnehmung einzugreifen. Zudem können die Ausnehmungen und Stifte unterschiedlicher Filtereinsätze unterschiedlich dimensioniert sein.

Nachteilig hierbei ist insbesondere, dass das Montieren bzw. Demontieren des Ringfilterelements ins bzw. aus dem Filtergehäuse schwergängig ist. Zudem kann eine entsprechende Krafteinwirkung auf die Filtereinrichtung, insbesondere auf das Ringfilterelement zu einer Beschädigung der Führungskontur und/oder des Führungselements führen, was mitunter zu einer Relativbewegung des Ringfilterelements zum Filtergehäuse führen kann und somit die fehlerfreie Funktionsweise der Filtereinrichtung beeinträchtigt.

Die vorliegende Erfindung beschäftigt sich mit dem Problem, für eine Filtereinrichtung der gattungsgemäßen Art, eine verbesserte oder zumindest alternative Ausführungsform anzugeben, die sich insbesondere durch eine vereinfachte Montage bzw. Demontage des Ringfilterelements und/oder durch eine stabile Anordnung des Ringfilterelements im Filtergehäuse in montiertem Zustand auszeichnet und möglichst kostengünstig umsetzbar ist.

Dieses Problem wird erfindungsgemäß durch den Gegenstand des unabhängigen Anspruches gelöst. Vorteilhafte Ausführungsformen sind Gegenstand der abhängigen Ansprüche.

Die vorliegende Erfindung beruht auf dem allgemeinen Gedanken, die Führungskontur mit nicht nur einer einzigen, sondern zusätzlich mit zumindest einer weiteren Axialnut zu versehen und zumindest ein weiteres Führungselement vorzusehen und diese derart anzuordnen bzw. auszubilden, dass im montierten Zustand jeweils eine Axialnut mit einem zugehörigen Führungselement zusammenwirkt. Hierdurch ist eine vereinfachte Montage bzw. Demontage des Ringfilterelements in das Gehäuse erreicht, da die Montage bzw. Demontage des Ringfilterelements durch zumindest zwei solche Führungselemente sowie der Führungskontur unterstützt wird. Insbesondere können die Führungselemente derart angeordnet sein, dass ein Kippen des Ringfilterelements bezüglich des Filtergehäuses verhindert oder zumindest reduziert wird. Im montierten Zustand ergibt sich darüber hinaus eine erhöhte Stabilität der Filtereinrichtung derart, dass die Filtereinrichtung, insbesondere das Ringfilterelement, höheren Kräften standhält. Die Führungskontur mit den Axialnuten und die zugehörigen Führungselemente funktionieren also nach dem Schlüssel-Schloss-Prinzip, wodurch auch die Sicherheit der Filtereinrichtung dahingehend erhöht ist, dass ausschließlich passende bzw. autorisierte Ringfilterelemente zum Einsatz kommen und somit insbesondere die Zuverlässigkeit und eine fehlerfrei Funktion der Filtereinrichtung für den Kunden gewährleistet werden kann. Dem Erfindungsgedanken entsprechend, weist die Filtereinrichtung also das Filtergehäuse und das darin montierbare Ringfilterelement auf. Zur Montage bzw. Demontage des Ringfilterelements ins bzw. aus dem Filtergehäuse kann das Filtergehäuse beispielsweise einen abnehmbaren Gehäusedeckel aufweisen, mit dem das Ringfilterelement bei der Montage bzw. Demontage zusammenwirkt. Das Ringfilterelement weist eine untere Endscheibe auf, an der ein axial abstehender Pin angeordnet ist, der beim montierten Zustand des Ringfilterelements in einen zugehörigen Kanal des Filtergehäuses eingreift. Im montierten Zustand des Ringfilterelements greifen also einerseits das jeweilige Führungselement in eine solche zugehörige Axialnut und der Pin in den Kanal ein. Bevorzugt weisen die Axialnuten die gleiche Orientierung auf wie der Pin. Dabei ist eine fehlerfreie Funktion der Filtereinrichtung lediglich in diesem Zustand möglich. Die Führungskontur mit den Axialnuten sowie die Führungselemente sind an zugehörigen Bereichen des Ringfilterelements und des Filtergehäuses angeordnet und insbesondere ausgebildet. Mit anderen Worten: Das Filtergehäuse weist in seinem Inneren einen ersten Bereich auf, während das Ringfilterelement einen diesem ersten Bereich zugehörigen zweiten Bereich aufweist. Hierbei ist an einem dieser Bereiche die Führungskontur angeordnet, während die Führungselemente am anderen, zugehörigen Bereich angeordnet sind. Das bedeutet, dass die Führungskontur am ersten Bereich des Filtergehäuses angeordnet ist, während die Führungselemente am zweiten Bereich des Ringfilterelements angeordnet sind oder umgekehrt. Dabei sind die Führungselemente bei der Montage des Ringfilterelements entlang der Führungskontur führbar. Insbesondere können die Führungselemente bei der Montage an der Führungskontur geführt sein, wobei zumindest eines der Führungselemente an der Führungskontur entlang gleiten kann. Erfindungsgemäß wirken die Führungselemente und die Axialnuten nach dem Schlüssel-Schloss-Prinzip zusammen, um eine Montage bzw. Demontage des Ringfilterelements im bzw. aus dem Filtergehäuse zu ermöglichen.

Das Schlüssel-Schloss-Prinzip ist insbesondere dadurch gegeben, dass das jeweilige Führungselement lediglich in eine einzige Axialnut eingreifen kann. Hierzu können das jeweilige Führungselement und/oder die jeweilige Axialnut derart ausgebildet und/oder angeordnet sein, dass das jeweilige Führungselement weder bei der Montage bzw. Demontage noch beim montierten Zustand zerstörungsfrei in eine nicht zugehörige Axialnut eingreifen kann.

Das Schlüssel-Schloss-Prinzip ist dadurch realisiert, dass die Axialnuten jeweils eine unterschiedliche Form und/oder Größe aufweisen. Dementsprechend weisen auch die komplementär ausgebildeten zugehörigen Führungselemente jeweils eine unterschiedliche Form und/oder Größe auf.

Die Montage des Ringfilterelements in das Filtergehäuse erfolgt bei bevorzugten Ausgestaltungen dadurch, dass das Ringfilterelement mittels einer durch das Führen zumindest eines solchen Führungselements an der Führungskontur realisierten Montagebewegung in das Filtergehäuse eingedreht wird. Entsprechendes gilt für eine Demontage des Ringfilterelements. Bei der Montagebewegung kann es sich insbesondere um eine Schraubbewegung im oder entgegen dem Uhrzeigersinn handeln, wobei die Demontage dementsprechend durch eine Demontagebewegung in entgegengesetzter Richtung erfolgen kann. Hierbei ist es vorstellbar, dass das Ringfilterelement bei einer vorgegebenen Relativposition zum Filtergehäuse, direkt und ohne eine entsprechende Führung der Führungselemente an der Führungskontur ins Filtergehäuse montierbar ist. Die Relativposition ist insbesondere diejenige Position, bei der das jeweilige Führungselement fluchtend zur zugehörigen Axialnut und der Pin fluchtend zum Kanal angeordnet sind. Entsprechendes gilt für die Demontage des Ringfilterelements aus dem Filtergehäuse.

Bevorzugt sind Ausführungsformen, bei denen ein Einlassquerschnitt der Axialnuten, durch den das zugehörige Führungselement in die Axialnut gelangt, entlang der Montagebewegung zunimmt. Dadurch wird insbesondere vermieden, dass das jeweilige Führungselement in eine nicht zugehörige Axialnut eingreift und ein Weiterdrehen verhindert. Hierzu kann insbesondere vorgesehen sein, dass die Größe der Führungselemente entlang der Montagebewegung entsprechend variiert.

Die Führungskontur kann prinzipiell eine beliebige Form und/oder Größe aufweisen. Bei bevorzugten Ausführungsformen ist die Führungskontur rampenartig ausgebildet bzw. geformt. Die rampenartige Ausbildung der Führungskontur kann insbesondere durch eine spiralförmige Ausbildung der Führungskontur um eine durch die Montage gegebene Drehachse realisiert sein. Durch eine solche Ausbildung der Führungskontur erfolgt während der Montage ein Absenken des Ringfilterelements in das Filtergehäuse bzw. ein Herausziehen des Ringfilterelements aus dem Filtergehäuse.

Alternativ kann die Führungskontur kanülenartig ausgebildet sein und zwei gegenläufige Rampen aufweisen. Auch bei dieser Variante ergibt sich ein vereinfachtes Montieren bzw. Demontieren des Ringfilterelements in bzw. aus dem Filtergehäuse.

Der montierte Zustand des Ringfilterelements im Filtergehäuse, bei dem der Pin in den Kanal eingreift, ist insbesondere diejenige Position, bei der das Ringfilterelement seine tiefste Position im Filtergehäuse einnimmt. Dementsprechend sind Ausführungsformen bevorzugt, bei denen die am tiefsten angeordnete Axialnut entlang einer Höhe der Führungskontur am niedrigsten angeordnet ist. Insbesondere ist also die Axialnut mit dem größten Einlassquerschnitt entlang der Höhe der Führungskontur niedriger angeordnet als die anderen Axialnuten mit jeweils größeren Einlassquerschnitten. Dies gilt insbesondere bei rampenartig bzw. kanülenartig ausgebildeten Führungskonturen. Besonders bevorzugt sind hierbei Ausgestaltungen, bei denen die Axialnut mit dem größten Einlassquerschnitt an der niedrigsten Stelle der Führungskontur angeordnet ist. Somit kann das der Axialnut mit dem größten Einlassquerschnitt zugehörige Führungselement bei der Montage entlang der Führungskontur geführt werden und beim Erreichen der niedrigsten Stelle der Führungskontur in die zugehörige Axialnut eingreifen. Dabei greifen auch die anderen Führungselemente in die zugehörigen Axialnuten und der Pin in den Kanal ein.

Im Allgemeinen kann die Führungskontur an einem beliebigen Bereich des Ringfilterelements bzw. des Filtergehäuses angeordnet sein. Entsprechendes gilt für die zugehörigen Führungselemente. Insbesondere kann die Führungskontur an einem in das Innere des Ringfilterelements eingreifenden Dom des Filtergehäuses angeordnet sein. Vorstellbar ist es hierbei, die Führungskontur an eine Außenkontur oder an einer Stirnseite des Doms anzuordnen. In diesem Fall sind die Führungselemente an einem dem Dom zugewandten Innenumfang, insbesondere an einer Innenzarge, des Ringfilterelements angeordnet. Die Innenzarge des Ringfilterelements ist hierbei in der Regel zylinderartig zentral im Ringfilterelement angeordnet und dient insbesondere der Montage und/oder Stabilisierung des Ringfilterelements. Bei der besagten Ausführungsform entspricht also der Dom des Filtergehäuses dem ersten Bereich, während der Innenumfang bzw. die Innenzarge des Ringfilterelements dem zweiten Bereich entspricht.

Bei anderen Ausführungsformen ist die Führungskontur an einem dem Filtergehäuse zugewandten Außenumfang des Ringfilterelements angeordnet, während die Führungselemente an einem dem Außenumfang des Ringfilterelements zugewandten Innenumfang des Filtergehäuses angeordnet sind.
Bei einer weiteren Alternative ist die Führungskontur an einem dem Ringfilterelement zugewandten Innenumfang des Filtergehäuses angeordnet, während die Führungselemente an einem dem Innenumfang des Filtergehäuses zugewandten Außenumfang des Ringfilterelements angeordnet sind.

Es versteht sich, dass die Führungskontur und/oder das jeweilige Führungselement an dem zugehörigen Bereich ausgebildet sein können/kann. Das heißt also, dass die Führungskontur und/oder das jeweilige Führungselement Teil des zugehörigen Bereiches des Filtergehäuses bzw. des Ringfilterelements bzw. Teil des Filtergehäuses oder des Ringfilterelements sein können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: einen Längsschnitt durch eine erfindungsgemäße Filtereinrichtung,
- Fig. 2: eine räumliche Ansicht eines Ringfilterelements,
- Fig. 3: einen Schnitt durch eine Filtereinrichtung im Bereich eines Pins,
- Fig. 4: eine räumliche Ansicht eines Doms der Filtereinrichtung,
- Fig. 5a-5d: unterschiedliche Schnitte durch eine Filtereinrichtung bei jeweils unterschiedlichen Montagezuständen des Ringfilterelements,
- Fig. 6: eine räumliche Ansicht eines Doms unterschiedlicher Ausführungsform,
- Fig. 7: eine räumliche Ansicht einer Filtereinrichtung im Bereich einer unteren Endscheibe,
- Fig. 8: eine räumliche Ansicht der Endscheibe aus Fig. 7,
- Fig. 9: eine räumliche Ansicht eines Ringfilterelements,
- Fig. 10: eine räumliche Draufsicht auf ein Filtergehäuse,
- Fig. 11: einen Längsschnitt durch ein Filtergehäuse,
- Fig. 12: eine räumliche Ansicht eines Ringfilterelements.

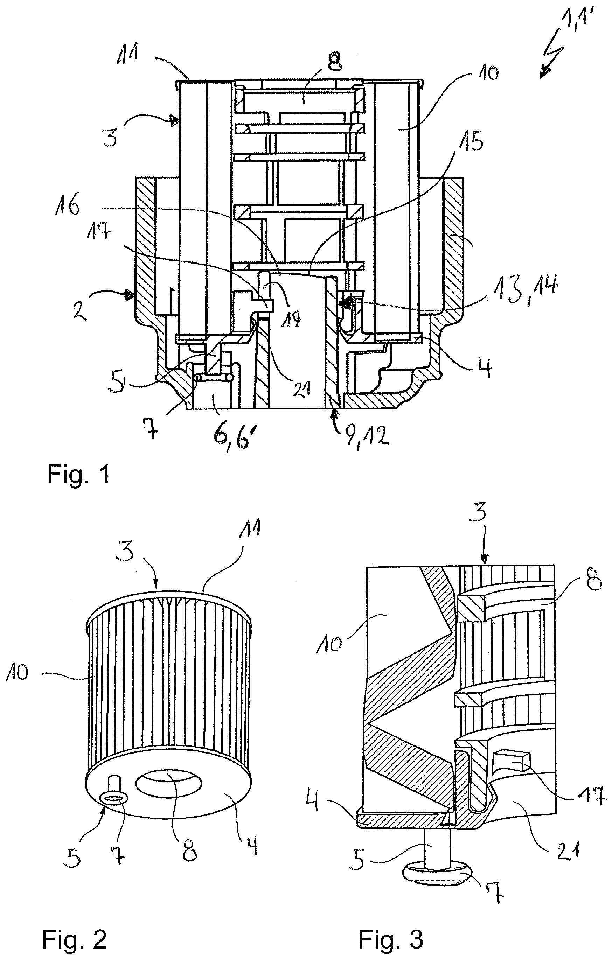

Fig. 1 zeigt einen Längsschnitt durch eine Filtereinrichtung 1, die beispielsweise als Ölfilter 1' ausgestaltet sein kann. Die Filtereinrichtung 1 weist ein Filtergehäuse 2 und ein in das Filtergehäuse 2 montierbares Ringfilterelement 3 auf, wobei in Fig. 1 ein in das Filtergehäuse 2 montierter Zustand des Ringfilterelements 3 dargestellt ist. Das Filtergehäuse 2 weist ferner einen hier nicht dargestellten Gehäusedeckel auf, der das Filtergehäuse 2 bezüglich der in Fig. 1 gezeigten Darstellung nach oben abschließt und vom restlichen Filtergehäuse 2, beispielsweise durch entsprechende Gewinde, abnehmbar ist, um eine Montage sowie eine Demontage des Ringfilterelements 3 in bzw. aus dem Filtergehäuse 2 zu ermöglichen. Das Ringfilterelement 3 weist auf seiner vom Gehäusedeckel abgewandten Seite eine untere Endscheibe 4 auf, an der ein axial von der unteren Endscheibe 4 abstehender und exzentrisch angeordneter Pin 5 angeordnet ist. Der Pin 5 greift bei montiertem Zustand in einen Kanal 6 des Filtergehäuses 2 ein, der insbesondere als Ablasskanal 6' ausgebildet sein kann, der beispielsweise dem Ablassen von Restöl aus dem Filtergehäuse 2 bei der Demontage des Ringfilterelements 3 dient. Der Pin 5 ist von einem Dichtring 7 umgeben, um den Kanal 6 abzudichten.

Das Ringfilterelement 3 ist zylinderförmig ausgebildet und weist eine mittig angeordnete und ebenfalls zylinderförmig ausgebildete Innenzarge 8 auf, die der Stabilisierung des Ringfilterelements 3 und der Montage des Ringfilterelements 3 in das Filtergehäuse 2 dient. In montiertem Zustand greift ein Dom 9 des Filtergehäuses 2 in das Innere der Innenzarge 8 und somit des Ringfilterelements 3 ein. Die Innenzarge 8 ist von einem Filtermaterial 10 umgeben, das an axial gegenüberliegenden Seiten von der unteren Endscheibe 4 und einer oberen Endscheibe 11 des Ringfilterelements 3 begrenzt ist.

Zudem weist das Filtergehäuse 2 einen ersten Bereich 12 auf, während das Ringfilterelement 3 einen dem ersten Bereich 12 des Filtergehäuses 2 zugehörigen zweiten Bereich 13 aufweist. Beim in Fig. 1 gezeigten Beispiel entspricht der erste Bereich 12 dem Dom 9, während der zweite Bereich 13 einem Innenumfang 14 des Ringfilterelements 3, der durch die Innenzarge 8 gebildet ist, entspricht. Am ersten Bereich 12 und somit am Dom 9 ist eine Führungskontur 15 angeordnet, die an der dem Ringfilterelement 3 zugewandten Stirnseite 16 des Doms 9 ausgebildet ist. Zudem sind am zweiten Bereich 13 und dementsprechend am Innenumfang 14 der Innenzarge 8 zumindest zwei Führungselemente 17, 18 angeordnet, wobei in der in Fig. 1 gezeigten Darstellung lediglich ein solches Führungselement 17 sichtbar ist. Das jeweilige Führungselement 17, 18 greift beim in Fig. 1 gezeigten montierten Zustand des Ringfilterelements 3 in eine zugehörige Axialnut 19, 20 der Führungskontur 15. Das heißt, dass im montierten Zustand des Ringfilterelements 3 einerseits der Pin 5 in den Kanal 6 eingreift und andererseits die Führungselemente 17, 18 in die zugehörigen Axialnuten 19, 20.

Fig. 2 zeigt eine räumliche Ansicht des Ringfilterelements 3, während Fig. 3 einen Schnitt durch das Ringfilterelement 3 zeigt. Insbesondere in Fig. 3 ist dabei erkennbar, dass die Innenzarge 8 auf der dem Pin 5 zugewandten Seite von einer an der unteren Endscheibe 4 angeordneten Dichtlippe 21 umgriffen ist, die zudem eine Abdichtung des Ringfilterelements 3 gewährleistet.

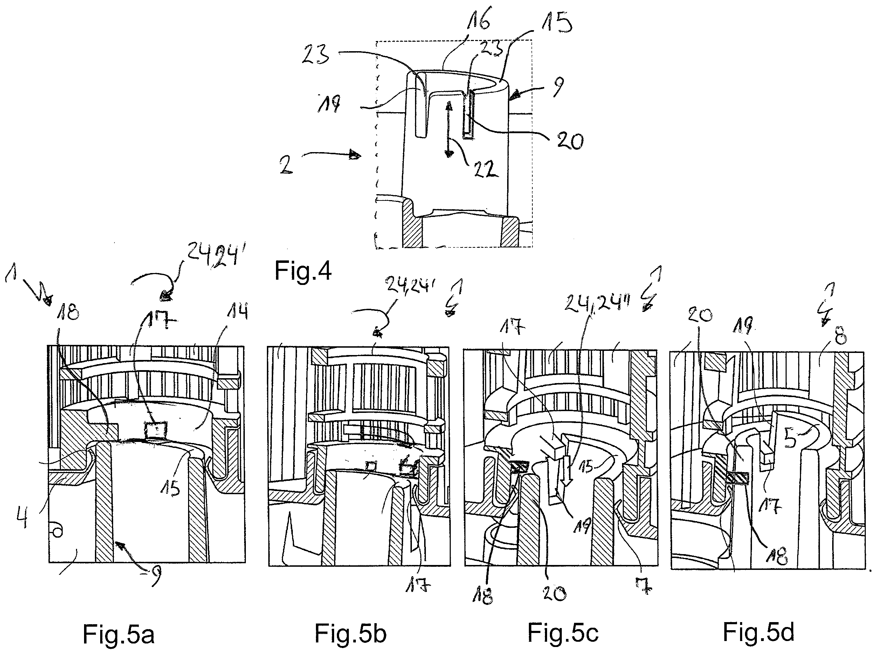

Fig. 4 zeigt eine räumliche Ansicht des Doms 9. Darin ist zu erkennen, dass die an der Stirnseite 16 des Doms 9 ausgebildete Führungskontur 15 zumindest zwei Axialnuten 19, 20 aufweist, wobei die in den Fig. 1 bis 12 gezeigten Ausführungsformen lediglich zwei solche Axialnuten 19, 20 aufweisen. Ferner ist zu erkennen, dass die Führungskontur 15 rampenartig ausgebildet ist bzw. eine spiralförmige Ausbildung aufweist. Dabei ist eine der Axialnuten 19 entlang einer Höhe 22 der rampenartig ausgebildeten Führungskontur 15 an der niedrigsten Stelle angeordnet. Dementsprechend ist die andere Axialnut 20 bezüglich der Höhe 22 der Führungskontur 15 an einer höheren Stelle ausgebildet. In Fig. 4 ist ferner erkennbar, dass die an der niedrigsten Stelle der Führungskontur 15 angeordnete Axialnut 19 größer ausgebildet ist, insbesondere einen größeren Eintrittsquerschnitt 23 aufweist, als die andere Axialnut 20.

Die Fig. 5a bis 5d zeigen jeweils einen Schnitt durch die Filtereinrichtung 1 bei unterschiedlichen Zuständen während der Montage des Ringfilterelements 3 in das Filtergehäuse 2 mit dem in Fig. 4 dargestellten Dom 9. In den Fig. 5 ist zu erkennen, dass das der an der niedrigsten Stelle der Führungskontur 15 angeordneten Axialnut 19 zugehörige Führungselement 17 größer ausgebildet ist als das der anderen Axialnut 20 zugehörige Führungselement 18. Die Führungselemente 17, 18 sind hierbei auf gleicher Höhe am Innenumfang 14 der Innenzarge 8 bzw. des Ringfilterelements 13 angeordnet sind. Die Führungselemente 17, 18 sind während der Montage des Ringfilterelements 3 in das Filtergehäuse 2 entlang der Führungskontur 15 geführt, wobei das der Axialnut 20 zugehörige Führungselement 18 entlang der Führungskontur 15 gleitet. Dementsprechend erfolgt die Montage des Ringfilterelements 3 in das Filtergehäuse 2 durch eine mit Pfeilen angedeutete Montagebewegung 24, die vorliegend im Wesentlichen einer Schraubbewegung 24' entspricht. Durch die Montagebewegung 24 werden also die Führungselemente 17, 18 entlang der Führungskontur 15 geführt. Dabei wird das größere Führungselement 17 über die Axialnut 20 mit dem kleineren Einlassquerschnitt 23 geführt, ohne darin einzugreifen, weil das Führungselement 17 größere Abmessungen aufweist als der Einlassquerschnitt 23 dieser Axialnut 20. Ist das größere Führungselement 17 oberhalb der zugehörigen Axialnut 19 angeordnet (Fig. 5c), so schlägt es bedingt durch die rampenartige Ausbildung der Führungskontur 15 am Dom 9 an, so dass eine weitere schraubenartige Montagebewegung 24 nicht möglich ist. In dieser Position befindet sich auch das andere Führungselement 18 oberhalb der zugehörigen Axialnut 20, während der Pin 5 oberhalb des Kanals 6 angeordnet ist. Dementsprechend kann das Ringfilterelement 3 mit einer axialen Bewegung 24" derart verschoben werden, dass die Führungselemente 17, 18 jeweils in die zugehörige Axialnut 19, 20 eingreifen. In dieser Position greift auch der Pin 5 in den Kanal 6 ein. Dementsprechend ist lediglich bei dem in Fig. 5d und Fig. 1 gezeigten Zustand eine fehlerfreie Funktion der Filtereinrichtung 1 möglich.

Die Montagebewegung 24 kann insbesondere durch besagten Gehäusedeckel erfolgen, der eine entsprechende Verbindung mit dem Ringfilterelement 3 aufweisen kann und während der Montage des Ringfilterelements 3 in das Filtergehäuse 2 mit dem Filtergehäuse 2 verschraubt wird.

In den Fig. 5a bis 5d ist somit gut erkennbar, dass die Führungselemente 17, 18 und die Axialnuten 19, 20 bei der Montage des Ringfilterelements 3 in das Filtergehäuse 2 nach dem Schlüssel-Schloss-Prinzip funktionieren. Dadurch kann verhindert werden, dass unerwünschte Ringfilterelemente 3, die beispielsweise eine unzureichende Qualität aufweisen, in das Filtergehäuse 2 montiert werden können.

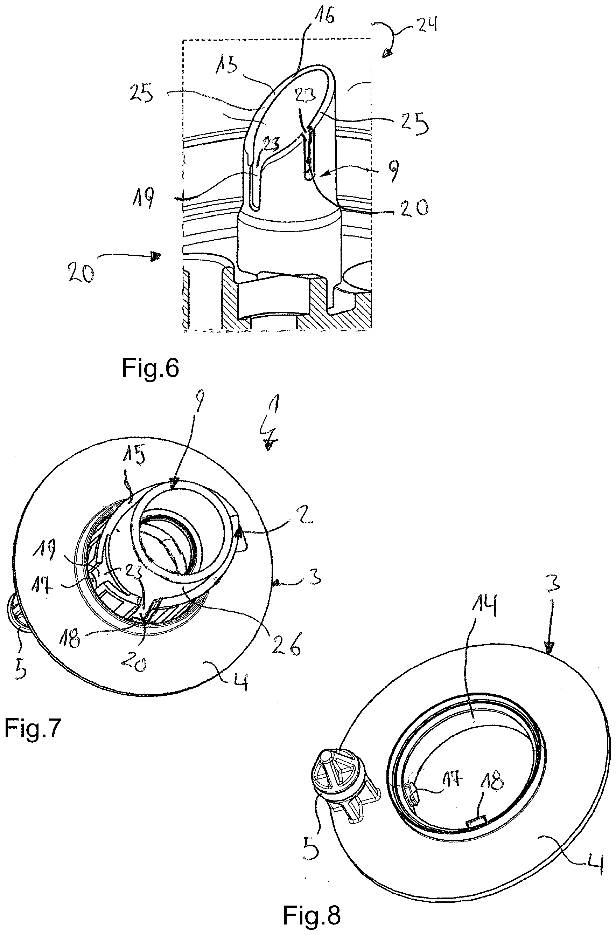

Fig. 6 zeigt eine räumliche Ansicht eines solchen Doms 9 bei einer anderen Ausführungsform. Der Dom 9 weist eine kanülenartige Form auf und ist an der Stirnseite 16 des Doms 9 ausgebildet. Die kanülenartig ausgebildete Führungskontur 15 weist hierbei zwei gegenläufige Rampen 25 auf, die symmetrisch verlaufen. Auch bei dieser Ausführungsform ist die Axialnut 19 mit dem größeren Eintrittsquerschnitt 23 an der tiefsten Stelle der Führungskontur 15 angeordnet, während die Axialnut 20 mit dem kleineren Einlassquerschnitt 23 höher angeordnet und im Bereich einer der Rampen 25 ausgebildet ist. Hierdurch erfolgt die Montagebewegung 24 derart, dass das der Axialnut 19 zugehörige Führungselement 17 während der Montage über die Axialnut 20 mit dem kleineren Einlassquerschnitt 23 geführt wird. Analog zu dem in den Fig. 5c und 5d gezeigten Verlauf der Montage, greifen dann die Führungselemente 17, 18 in die zugehörigen Axialnuten 19, 20.

In Fig. 7 ist eine andere Ausführungsform der Filtereinrichtung 1 gezeigt, wobei dem einfachen Verständnis halber lediglich die untere Endscheibe 4 des Ringfilterelements 3 und der Dom 9 des Filtergehäuses 2 dargestellt sind. Bei der in Fig. 7 gezeigten Ausführungsform ist die Führungskontur 15 an einem Außenumfang 26 des Doms 9 angeordnet und kanülenförmig ausgebildet. In Fig. 8 ist die zugehörige untere Endscheibe 4 gesondert dargestellt. Darin ist erkennbar, dass die Führungselemente 17, 18 an der Endscheibe 4 angeordnet und schraubenkopfartig ausgebildet sind.

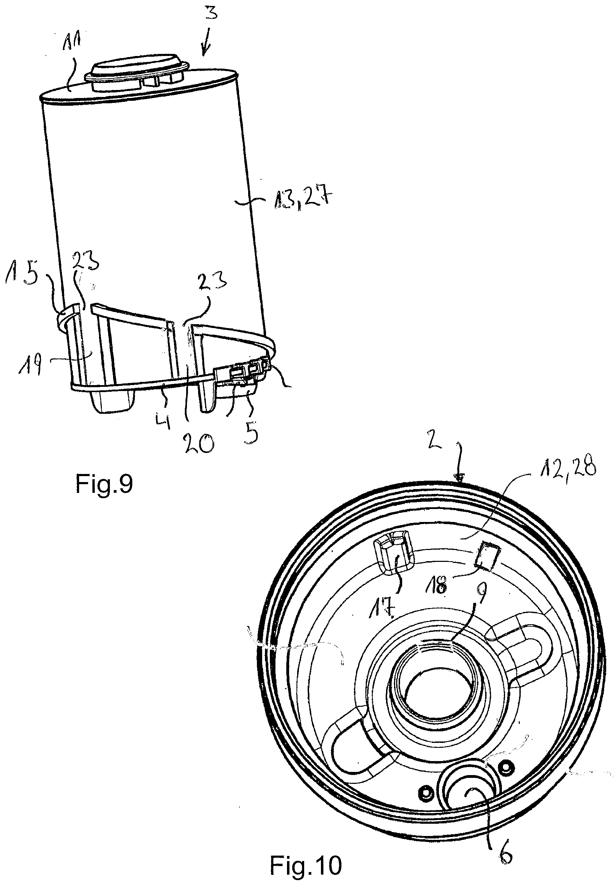

Eine weitere Ausführungsform der Filtereinrichtung 1 ist in den Fig. 9 und 10 dargestellt, wobei die Fig. 9 das Ringfilterelement 3 zeigt, während in Fig. 10 das zugehörige Filtergehäuse 2 dargestellt ist. Hierbei ist die Führungskontur 15 an einem Außenumfang 27 des Ringfilterelements 3 angeordnet, der somit dem zweiten Bereich 13 entspricht. Der Außenumfang 27 des Ringfilterelements 3 ist beim montierten Zustand einem Innenumfang 28 des Filtergehäuses 2 zugewandt. Am Innenumfang 28 des Filtergehäuses 2 sind die den Axialnuten 19, 20 zugehörigen Führungselemente 17, 18 angeordnet, wodurch der Innenumfang 28 des Filtergehäuses 2 dem ersten Bereich 12 entspricht. Hierbei ist im Gegensatz zu den bisherigen Ausführungsformen die Axialnut 19 mit dem größten Einlassquerschnitt 23 nicht an der niedrigsten Stelle der Führungskontur 15, sondern an der höchsten Stelle der Führungskontur 5 angeordnet.

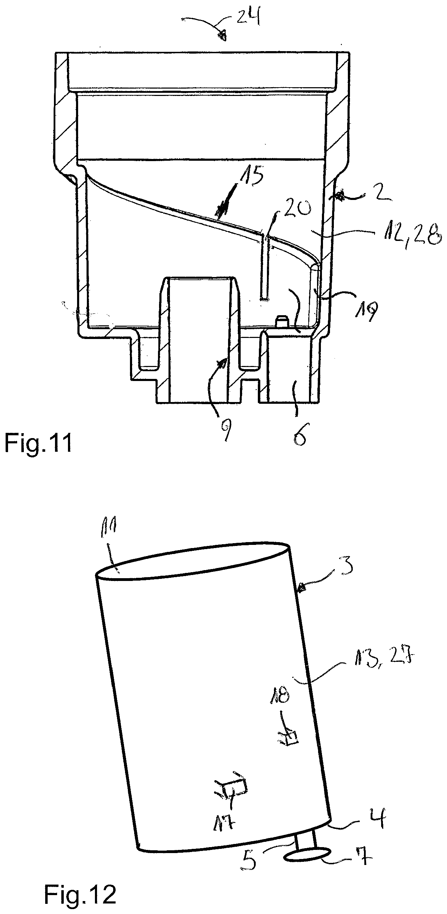

Die Fig. 11 und 12 zeigen eine weitere Ausführungsform der Filtereinrichtung 1, wobei in Fig. 11 ein Längsschnitt durch das Filtergehäuse 2 gezeigt ist, während in Fig. 12 eine räumliche Ansicht des zugehörigen Ringfilterelements 3 dargestellt ist. Im Gegensatz zu der in den Fig. 9 und 10 dargestellten Ausführungsform ist die Führungskontur 15 hier am Innenumfang 28 des Filtergehäuses 2 angeordnet, während die Führungselemente 17, 18 am Außenumfang 27 des Ringfilterelements angeordnet sind. Zudem sind die Führungselemente 17, 18 im Unterschied zu den bisherigen Ausführungsformen auf unterschiedlichen Höhen des zugehörigen Bereiches 13, hier also unterschiedlichen Höhen des Außenumfanges 27 des Ringfilterelements 3, angeordnet.

Bei den in den Fig. 7 und 8 bzw. 9 und 10 dargestellten Ausführungsformen ist die Führungskontur 15 gerüstartig ausgebildet und am entsprechenden Außenumfang 26, 27 angeordnet ist.

## Patentansprüche

1. Filtereinrichtung (1) mit einem Filtergehäuse (2) und einem darin montierbaren Ringfilterelement (3), wobei
- das Ringfilterelement (3) an einer unteren Endscheibe (4) einen axial abstehenden Pin (5) aufweist, der bei montiertem Zustand in einen Kanal (6) des Filtergehäuses (2) eingreift,
- das Filtergehäuse (2) in seinem Inneren einen ersten Bereich (12) aufweist,
- das Ringfilterelement (3) einen dem ersten Bereich (12) zugehörigen zweiten Bereich (13) aufweist,
- an einem der Bereiche (12, 13) eine Führungskontur (15) angeordnet ist,
- am anderen Bereich (12, 13) ein bei der Montage des Ringfilterelements (3) an der Führungskontur (15) führbares Führungselement (17, 18) vorgesehen ist,
- die Führungskontur (15) eine Axialnut (19, 20) aufweist,
- bei montiertem Ringfilterelement (3) der Pin (5) in den Kanal (6) und das Führungselement (17,18) in die Axialnut (19, 20) eingreifen,
**dadurch gekennzeichnet,**
- **dass** die Führungskontur (15) zumindest eine weitere Axialnut (19, 20) aufweist,
- **dass** am das Führungselement (17, 18) aufweisenden Bereich (12, 13) jeweils ein einer solchen weiteren Axialnut (19, 20) zugehöriges weiteres Führungselement (17, 18) ausgebildet ist,
- **dass** die Axialnuten (19, 20) und die zugehörigen Führungselemente (17, 18) zum Zusammenwirken des Filtergehäuses (2) und des Ringfilterelements (3) nach dem Schlüssel-Schloss-Prinzip komplementär ausgebildet sind,
- **dass** die Axialnuten (19, 20) jeweils eine unterschiedliche Form und/oder Größe aufweisen.

2. Filtereinrichtung nach Anspruch 1,
**dadurch gekennzeichnet,**
**dass** das Ringfilterelement (3) mittels einer durch das Führen zumindest eines solchen Führungselements (17, 18) an der Führungskontur (15) realisierten Montagebewegung (24) in das Filtergehäuse (2) montierbar ist.

3. Filtereinrichtung nach Anspruch 2,
**dadurch gekennzeichnet,**
**dass** ein Einlassquerschnitt (23) der Axialnuten (19, 20), durch den das zugehörige Führungselement (17, 18) in die Axialnut (19, 20) gelangt, entlang der Montagebewegung (24) zunimmt.

4. Filtereinrichtung nach einem der Ansprüche 1 bis 3,
**dadurch gekennzeichnet,**
**dass** die Führungskontur (15) rampenartig ausgebildet ist.

5. Filtereinrichtung nach einem der Ansprüche 1 bis 4,
**dadurch gekennzeichnet,**
**dass** die Führungskontur (15) kanülenartig ausgebildet ist und zwei gegenläufige Rampen (15) aufweist.

6. Filtereinrichtung nach einem der Ansprüche 3 bis 5,
**dadurch gekennzeichnet,**
**dass** die Axialnut (19, 20) mit dem größten Einlassquerschnitt (23) entlang einer Höhe (22) der Führungskontur (15) niedriger, insbesondere an der niedrigsten Stelle, angeordnet ist als die anderen Axialnuten (19, 20).

7. Filtereinrichtung nach einem der Ansprüche 1 bis 6,
**dadurch gekennzeichnet,**
- **dass** die Führungskontur (15) an einem in das Innere des Ringfilterelements (3) eingreifenden Dom (9) des Filtergehäuses (2) angeordnet ist,
- **dass** die Führungselemente (17, 18) an einer dem Dom (9) zugewandten Innenumfang (14) des Ringfilterelements (3) angeordnet sind.

8. Filtereinrichtung nach einem der Ansprüche 1 bis 6,
**dadurch gekennzeichnet,**
- **dass** die Führungskontur (15) an einem dem Filtergehäuse (2) zugewandten Außenumfang (27) des Ringfilterelements (3) angeordnet ist,
- **dass** die Führungselemente (17, 18) an einem dem Außenumfang (27) des Ringfilterelements (3) zugwandten Innenumfang (28) des Filtergehäuses (2) angeordnet sind.

9. Filtereinrichtung nach einem der Ansprüche 1 bis 6,
**dadurch gekennzeichnet,**
- **dass** die Führungskontur (15) an einem dem Ringfilterelement (3) zugwandten Innenumfang (28) des Filtergehäuses (2) angeordnet ist,
- **dass** die Führungselemente (17, 18) an einem dem Innenumfang (28) des Filtergehäuses (2) zugewandten Außenumfang (27) des Ringfilterelements (3) angeordnet sind.

## Claims

1. Filter device (1) having a filter housing (2) and a ring filter element (3) able to be mounted therein, wherein
- the ring filter element (3) has on a bottom end disc (4) an axially protruding pin (5), which in a mounted state engages in a channel (6) of the filter housing (2),
- the filter housing (2) has in its interior a first region (12),
- the ring filter element (3) has a second region (13) associated with the first region (12),
- on one of the regions (12, 13) is disposed a guide contour (15),
- on the other region (12, 13) is provided a guide element (17, 18) which can be guided on the guide contour (15) at the mounting of the ring filter element (3),
- the guide contour (15) has an axial groove (19, 20),
- in the case of a mounted ring filter element (3) the pin (5) engages in the channel (6) and the guide element (17, 18) engages in the axial groove (19, 20), **characterised in**
- **that** the guide contour (15) has at least one further axial groove (19, 20),
- **that** at the region (12, 13) having the guide element (17, 18) is formed respectively one further guide element (17, 18) associated with one such further axial groove (19, 20),
- **that** the axial grooves (19, 20) and the associated guide elements (17, 18) are formed in a complementary manner for the cooperation of the filter housing (2) and the ring filter element (3) according to the key-lock principle,
- **that** the axial grooves (19, 20) have respectively a different shape and/or size.

2. Filter device according to claim 1,
**characterised in**
**that** the ring filter element (3) is able to be mounted into the filter housing (2) by means of a mounting movement (24) realised by the guiding of at least one such guide element (17, 18) on the guide contour (15).

3. Filter device according to claim 2,
**characterised in**
**that** an inlet cross-section (23) of the axial grooves (19, 20), through which the associated guide element (17, 18) enters into the axial groove (19, 20), increases along the mounting movement (24).

4. Filter device according to any of claims 1 to 3,
**characterised in**
**that** the guide contour (15) is formed as a ramp.

5. Filter device according to any of claims 1 to 4,
**characterised in**
**that** the guide contour (15) is in the form of a cannula and has two ramps (15) extending in opposite directions.

6. Filter device according to any of claims 3 to 5,
**characterised in**
**that** the axial groove (19, 20) with the greatest inlet cross-section (23) along a height (22) of the guide contour (15) is disposed lower, in particular at the lowest point, than the other axial grooves (19, 20).

7. Filter device according to any of claims 1 to 6,
**characterised in**
- **that** the guide contour (15) is disposed on a dome (9) of the filter housing (2) engaging into the interior of the ring filter element (3),
- **that** the guide elements (17, 18) are disposed on an inner circumference (14) of the ring filter element (3) facing the dome (9).

8. Filter device according to any of claims 1 to 6,
**characterised in**
- **that** the guide contour (15) is disposed on an outer circumference (27) of the ring filter element (3) facing the filter housing (2),
- **that** the guide elements (17, 18) are disposed on an inner circumference (28) of the filter housing (2) facing the outer circumference (27) of the ring filter element (3).

9. Filter device according to any of claims 1 to 6,
**characterised in**
- **that** the guide contour (15) is disposed on an inner circumference (28) of the filter housing (2) facing the ring filter element (3),
- **that** the guide elements (17, 18) are disposed on an outer circumference (27) of the ring filter element (3) facing the inner circumference (28) of the filter housing (2).

## Revendications

1. Dispositif de filtre (1) ayant un boîtier de filtre (2) et un élément de filtre annulaire (3) qui y est monté, dans lequel
- l'élément de filtre annulaire (3) présente sur un disque d'extrémité (4) inférieur une broche dressée axialement (5), qui s'engage à l'état monté dans un canal (6) du boîtier de filtre (2),
- le boîtier de filtre (2) présente dans sa partie intérieure une première zone (12),
- l'élément de filtre annulaire (3) présente une seconde zone (13) associée à la première zone (12),
- un contour de guidage (15) est agencé dans l'une des zones (12, 13),
- il est prévu dans l'autre zone (12, 13) un élément de guidage (17, 18) qui peut être guidé sur le contour de guidage (15) lors du montage de l'élément de filtre annulaire (3),
- le contour de guidage (15) présente une rainure axiale (19, 20),
- lorsque l'élément de filtre annulaire (3) est monté, la broche (5) s'engage dans le canal (6) et l'élément de guidage (17, 18) dans la rainure axiale (19, 20), **caractérisé en ce que** :
- le contour de guidage (15) présente au moins une autre rainure axiale (19, 20),
- un autre élément de guidage (17, 18) associé à cette autre rainure axiale (19, 20) est formé respectivement sur la zone (12, 13) présentant l'élément de guidage (17, 18),
- les rainures axiales (19, 20) et les éléments de guidage (17, 18) associés sont formés de manière complémentaire selon le principe d'une serrure fermée pour faire coopérer le boîtier de filtre (2) et l'élément de filtre annulaire (3)
- les rainures axiales (19, 20) présentent respectivement une forme et/ou une taille différente(s).

2. Dispositif de filtre selon la revendication 1,
**caractérisé en ce que**
l'élément de filtre annulaire (3) peut être monté dans le boîtier de filtre (2) au moyen d'un déplacement de montage (24) réalisé par le guidage d'au moins un tel élément de guidage (17, 18) sur le contour de guidage (15).

3. Dispositif de filtre selon la revendication 2,
**caractérisé en ce que**
la section transversale d'admission (23) des rainures axiales (19, 20), à travers laquelle l'élément de guidage associé (17, 18) parvient dans la rainure axiale (19, 20), augmente le long du déplacement de montage (24).

4. Dispositif de filtre selon l'une quelconque des revendications 1 à 3,
**caractérisé en ce que**
le contour de guidage (15) est en forme de rampe.

5. Dispositif de filtre selon l'une quelconque des revendications 1 à 4,
**caractérisé en ce que**
le contour de guidage (15) est en forme de canule et présente deux rampes (15) opposées.

6. Dispositif de filtre selon l'une quelconque des revendications 3 à 5,
**caractérisé en ce que**
la rainure axiale (19, 20) ayant la section transversale d'admission (23) la plus grande le long d'une hauteur (22) du contour de guidage (15) est agencée moins haut, en particulier au point le plus bas, que les autres rainures axiales (19, 20).

7. Dispositif de filtre selon l'une quelconque des revendications 1 à 6,
**caractérisé en ce que**
- le contour de guidage (15) est agencé sur un dôme (9) du boîtier de filtre (2) s'engageant dans l'intérieur de l'élément de filtre annulaire (3),
- les éléments de guidage (17, 18) sont agencés sur une périphérie interne (14) - tournée vers le dôme (9) - de l'élément de filtre annulaire (3).

8. Dispositif de filtre selon l'une quelconque des revendications 1 à 6,
**caractérisé en ce**
- **que** le contour de guidage (15) est agencé sur une périphérie externe (27) - tournée vers le boîtier de filtre (2) - de l'élément de filtre annulaire (3),
- **que** les éléments de guidage (17, 18) sont agencés sur une périphérie interne (28) - tournée vers la périphérie externe (27) de l'élément de filtre annulaire (28) - du boîtier de filtre (2).

9. Dispositif de filtre selon l'une quelconque des revendications 1 à 6,
**caractérisé en ce**
- **que** le contour de guidage (15) est agencé sur une périphérie interne (28) - tournée vers l'élément de filtre annulaire (3) - du boîtier de filtre (2),
- **que** les éléments de guidage (17, 18) sont agencés sur une périphérie externe (27) - tournée vers la périphérie interne (28) du boîtier de filtre (2) - de l'élément de filtre annulaire (3).
